# EUROPEAN PATENT SPECIFICATION

(11) **EP 3 159 497 B1**
(45) Date of publication and mention of the grant of the patent: **19.08.2020**
(21) Application number: 16194184.4
(22) Date of filing: 17.10.2016
(51) Int. Cl.: F01D 25/12

(54) **SYSTEM AND METHOD FOR WHEEL SPACE TEMPERATURE MANAGEMENT**
SYSTEM UND VERFAHREN FÜR RADRAUMTEMPERATURVERWALTUNG
SYSTÈME ET PROCÉDÉ DE GESTION DE TEMPÉRATURE DE PASSAGE DE ROUE

(30) Priority: 19.10.2015 US 201514886171
(43) Date of publication of application: 26.04.2017
(73) Proprietor: General Electric Company, Schenectady, NY 12345 (US)
(72) Inventor: NANDAGOPAL, Pugalenthi, 560066 Bangalore (IN); MORGAN, Rex Allen, Greenville, SC 29615 (US); SOUNDIRAMOURTY, Sendilkumaran, 560066 Bangalore (IN); MUKHOPADHYAY, Debabrata, 560066 Bangalore (IN)
(74) Representative: BRP Renaud & Partner mbB Rechtsanwälte Patentanwälte Steuerberater

(56) References cited:
- US-A- 4 338 780
- US-A1- 2002 108 376
- US-A1- 2004 088 998

## Description

### TECHNICAL FIELD

The present application and the resultant patent relate generally to gas turbine engines and more particularly relate to systems and methods for wheel space temperature management using steam or water flows for cooling during hot ambient conditions without a reduction in overall system performance and efficiency.

### BACKGROUND OF THE INVENTION

In a gas turbine engine, hot combustion gases generally flow from a combustor through a transition piece and into a turbine along a hot gas path to produce useful work. Because higher temperature combustion flows generally result in an increase in the performance, the efficiency, and the overall power output of the gas turbine engine, the components that are subject to the higher temperature combustion flows must be cooled to allow the gas turbine engine to operate at such increased temperatures without damage or a reduced lifespan.

A wheel space is defined between the first stage nozzle assembly and the compressor exit diffuser. Due to its location adjacent to the outlet of the combustor, the wheel space may be subject to extremely high temperatures. To maintain the wheel space within a temperature range that is suitable for the long term durability of the components therein, a flow of cooling air may be delivered to the wheel space. Under certain operating conditions, such as high ambient temperatures resulting in high temperatures at the inlet of the compressor, the volume of the cooling air may be insufficient to maintain the wheel space within a desired temperature range. In such situations, a number of bore plugs may be removed from bore holes in the compressor discharge case. These holes may allow a portion of the high pressure air exiting the compressor to flow into the wheel space for additional cooling. Although these holes provide supplemental cooling of the wheel space, the modification may be permanent. In other words, the bore plugs holes generally are not reinserted within the bore holes. Given such, cooling air may be delivered to the wheel space even when not be required, *i.e.*, during cooler ambient conditions and the like. This loss of compressor air thus may lower the overall performance and efficiency of the gas turbine engine.

US 4338780 relates to cooling of a gas turbine blade using coolant passed through a water spraying chamber. US 2004/088998 A1 relates to cooling of gas turbine blades using liquid introduced in coolant flowing in a channel along the rotor. US 2002/108376 A1 relates to a gas turbine engine thermal management system in which an atomized cooling agent is delivered to a non primary gas flow path.

### SUMMARY OF THE INVENTION

The invention is defined by the appended claims.

The present application discloses a gas turbine engine intended to be used in part in hot ambient conditions. The gas turbine engine may include a compressor, a turbine defining a wheel space adjacent to a number of rotor wheels, and a wheel space water cooling system in communication with the wheel space to provide a flow of cooling water thereto.

The present application discloses a method of cooling a turbine wheel space on demand with increased performance as compared to known methods. The method may include the steps of providing a water discharge nozzle about the turbine wheel space, monitoring an ambient temperature, activating the water discharge nozzle when the ambient temperature exceeds a predetermined temperature to provide a flow of water to the turbine wheel space, and maintaining a compressor discharge case in a sealed state so as to prevent a flow of compressor air from reaching the wheel space.

The present application discloses a gas turbine engine intended to be used in part in hot ambient conditions. The gas turbine engine may include a compressor with a compressor discharge case, a turbine with a wheel space adjacent to a number of rotor wheels, and a wheel space water cooling system in communication with the wheel space to provide a flow of water through the compressor discharge case. The flow of water may be liquid and/or vapor.

These and other features and improvements of the present application and the resultant patent will become apparent to one of ordinary skill in the art upon review of the following detailed description when taken in conjunction with the several drawings and the appended claims.

### BRIEF DESCRIPTION OF THE DRAWINGS

Fig. 1 is a partial sectional view of a gas turbine engine having a compressor, a combustor, and a turbine.
Fig. 2 is a partial sectional view of a gas turbine engine with a wheel space water cooling system as may be described herein.

### DETAILED DESCRIPTION

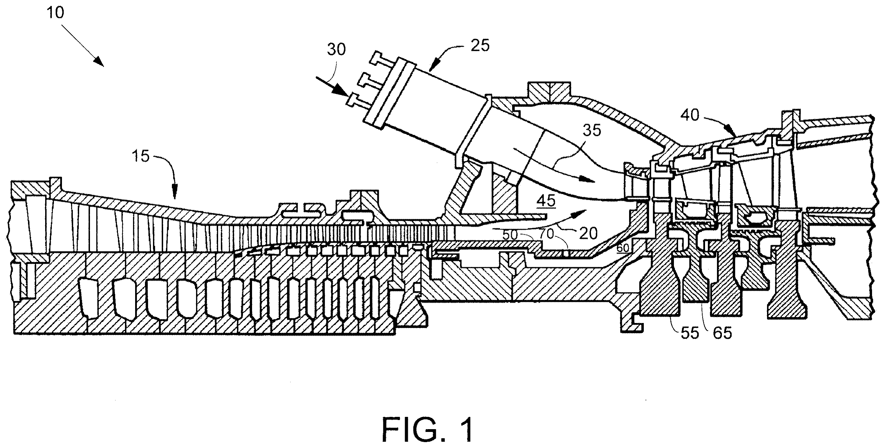

Referring now to the drawings, in which like numerals refer to like elements throughout the several views, Fig. 1 shows a schematic view of gas turbine engine 10 as may be used herein. The gas turbine engine 10 may include a compressor 15. The compressor 15 compresses an incoming flow of air 20. The compressor 15 delivers the compressed flow of air 20 to a combustor 25. The combustor 25 mixes the compressed flow of air 20 with a pressurized flow of fuel 30 and ignites the mixture to create a flow of combustion gases 35. Although only a single combustor 25 is shown, the gas turbine engine 10 may include any number of combustors 25. The flow of combustion gases 35 is in turn delivered to a turbine 40. The flow of combustion gases 35 drives the turbine 40 so as to produce mechanical work. The mechanical work produced in the turbine 40 drives the compressor 15 via a shaft and an external load such as an electrical generator and the like.

The gas turbine engine 10 may use natural gas, various types of syngas liquid fuels, and/or other types of fuels and blends thereof. The gas turbine engine 10 may be any one of a number of different gas turbine engines offered by General Electric Company of Schenectady, New York, including, but not limited to, those such as a 7 or a 9 series heavy duty gas turbine engine and the like. The gas turbine engine 10 may have many different configurations and may use other types of components. Other types of gas turbine engines also may be used herein. Multiple gas turbine engines, other types of turbines, and other types of power generation equipment also may be used herein together.

The compressor 15 may include a compressor discharge plenum 45 at least partially defined by a compressor discharge case 50. The compressed flow of air 20 discharged from the compressor 15 may flow through the compressor discharge plenum 45 in route to the combustor 25. The resulting hot combustion gases 35 from the combustor 25 then may flow into the turbine 40. The turbine 40 may include a number of rotor wheels 55 disposed about a turbine wheel space 60. The rotor wheels 55 may be mounted to the shaft in a number of annular arrays. The turbine 40 also may include a number of annularly disposed stator components 65 positioned about the turbine wheel space 60. The turbine wheel space 60 is positioned adjacent to the combustor 25 and the flow of hot combustion gases 35. Other components and other configurations may be used herein.

A number of bore holes 70 may extend through the compressor discharge case 50. These bore holes 70 may be filled with bore plugs and the like. As described above, in order to increase the flow of air to the wheel space 60 depending upon local ambient conditions or other types of operational parameters, the plugs may be removed from one or more bore holes 70 such that a portion of the flow of air 20 from the compressor 15 may be diverted into and cool the wheel space 60 through the bore holes 70. Although the portion of the flow of air 20 provides cooling, this flow does not provide useful work.

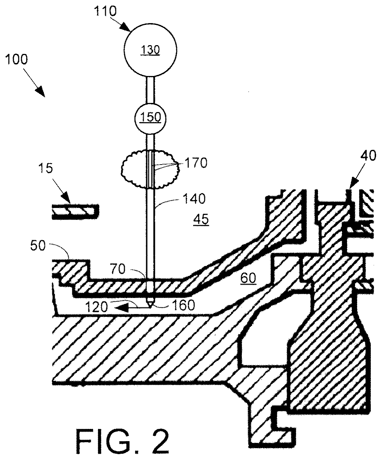

Fig. 2 shows a portion of a gas turbine engine 100 as may be described herein. The gas turbine engine 100 may be similar to that described above and may include the compressor 15, the combustor 25, the turbine 40, and other components. The compressor 15 may define the compressor discharge plenum 45 and the compressor discharge case 50 similar to that described above. Likewise, the turbine 40 may define the rotor wheels 55 and the turbine wheel space 60. Other components and other configurations may be used herein.

The compressor discharge case 50 may include at least one bore hole 70 therethrough. Instead of providing for a flow of the cooling air 20 therethrough, at least one of the bore holes 70 may be used in conjunction with a wheel space water cooling system 110. The wheel space water cooling system 110 may deliver a flow of water 120 into the wheel space 60 so as to provide cooling. The flow of water 120 may be used in the liquid and/or the vapor state as steam.

The wheel space water cooling system 110 may include a source of water 130. The source of water 130 preferably may include distilled water and the like. Alternatively, a flow of steam also may be extracted from a heat recovery steam generator, a steam turbine, or other types of steam sources. The wheel space water cooling system 110 may include one or more water lines in communication with the source of water 130 and the bore holes 70 through the compressor discharge case 50. A conventional water pump 150 may be positioned on the water lines 140. Any type of pumping device may be used herein with any suitable size and/or capacity. The water lines 140 may extend through the bore holes 70 in the compressor discharge case 50 in whole or in part.

The water lines 140 may terminate in a discharge nozzle 160. The discharge nozzle 160 may have any suitable size, shape, or configuration. The discharge nozzle 160 may be positioned within the wheel space 60 at any suitable angle. For example, the discharge nozzle 160 may be positioned in a counter flow arrangement, a cross flow arrangement, and/or at any suitable angle. Given the high temperature environment in which the dispensing nozzle 160 may be positioned, the discharge nozzle 160 and/or part or all of the water lines 140 may include a thermal barrier coating and the like thereon. If the flow of water 120 may be used in both the liquid sate and the vapor state as steam, the water line 140 may be a concentric line 170 and the like. The concentric line 170 may have an inner line for the flow of water as liquid or steam and an outer line for stagnation air/vacuum. The thermal barrier coating and/or the concentric line 170 may assist in restricting the heat transfer from the compressor discharge case air to the flow of water 120 entering into the wheel space 60 and the surrounding region. Specifically, the flow of water 120 may be heated by the compressor discharge case air and may be in the form of steam once the flow reaches the discharge nozzle 160. Alternatively, the flow of water 120 may be heated by the turbine exhaust gases, an auxiliary boiler, or other type of conventional heat source. Other components and other configurations s may be used herein.

In use, the wheel space water cooling system 110 may be activated only when local ambient conditions and/or other types of operational parameters require additional wheel space cooling. Specifically, the wheel space water cooling system 110 may be activated, for example, when the ambient temperature exceeds a predetermined temperature. A number of sensors and the like thus may be used with a controller in communication with the pump 150 or otherwise to initiate and terminate the flow of water 120. The flow of water 120, in the liquid state or the vapor state, thus may flow through the water line 140 and be discharged via the discharge nozzle 160 into the wheel space 60 as needed. Likewise, the flow may be terminated when overall temperatures may be reduced

The wheel space water cooling system 110 thus provides overall adequate cooling but without the loss of efficiency and output found in known air cooled systems that divert a portion of the compressor discharge air away from the combustion process. The wheel space water cooling system 110 thus provides adequate wheel space cooling at elevated temperatures without an overall performance loss. In fact, the use of the wheel space water cooling system 110 may increase overall system performance as compared to known methods.

It should be apparent that the foregoing relates only to certain embodiments of the present application and the resultant patent. Numerous changes and modifications may be made herein by one of ordinary skill in the art without departing from the scope of the invention as defined by the following claims.

## Claims

1. A gas turbine engine (100) intended to be used in part in hot ambient conditions, comprising:
a compressor (15) wherein the compressor (15) comprises a compressor discharge case (50) with one or more bore holes (70) therethrough;
a turbine (40);
the turbine (40) comprising a wheel space (60) adjacent to a plurality of rotor wheels (55); and
a wheel space water cooling system (110) in communication with the wheel space (60) to provide a flow of water (120) thereto, wherein the wheel space water cooling system (110) comprises a water line (140) extending through one of the one or more bore holes (70) in whole or in part;
wherein the wheel space water cooling system (100) is activated above a predetermined ambient temperature, **characterized in that**
the compressor discharge case (50) is maintained in a sealed state so as to prevent a flow of compressor air (20) from reaching the wheel space (60) through the compressor discharge case (50).

2. The gas turbine engine (100) of claim 1, wherein the water line (140) comprises a concentric line (170).

3. The gas turbine engine (100) of any of claims 1 to 2, wherein the one or more bore holes (70) in the compressor discharge case (50) are plugged to prevent a flow of air (20) to the wheel space (60).

4. The gas turbine engine (100) of any preceding claim, wherein the wheel space water cooling system (110) comprises a source of water (130).

5. The gas turbine engine (100) of any preceding claim, wherein the wheel space water cooling system (110) comprises a pump (150).

6. The gas turbine engine (100) of any preceding claim, wherein the wheel space cooling system (110) comprises a discharge nozzle (160).

7. The gas turbine engine (100) of claim 6, wherein the discharge nozzle (160) comprises a counter-flow position, a cross-flow position, or an angled position.

8. The gas turbine engine (100) of claim 6 or claim 7, wherein the discharge nozzle (160) comprises a thermal barrier coating.

9. The gas turbine engine (100) of any preceding claim, wherein the flow of water (120) comprises a flow of water in a liquid state and/or a flow of water in a gaseous state, wherein optionally the flow of water (120) comprises the gaseous state during steady state turbine operation.

10. The gas turbine engine (100) of any preceding claim, wherein the turbine (40) comprises a plurality of stator components (65) positioned about the wheel space (60).

11. A method of cooling a turbine wheel space (60) on demand with increased efficiency, comprising:
providing a water discharge nozzle (160) about the turbine wheel space (60);
monitoring an ambient temperature;
activating the water discharge nozzle (160) when the ambient temperature exceeds a predetermined temperature to provide a flow of water to the turbine wheel space (60); **characterized in that**
maintaining a compressor discharge case (50) in a sealed state so as to prevent a flow of compressor air (20) from reaching the wheel space (60) through the compressor discharge case (50).

## Patentansprüche

1. Gasturbinentriebwerk (100), das dazu vorgesehen ist, zum Teil bei heißen Umgebungsbedingungen verwendet zu werden, umfassend:
einen Verdichter (15), wobei der Verdichter (15) ein Verdichter-Auslassgehäuse (50) mit einem oder mehreren Bohrlöchern (70) durch diesen umfasst;
eine Turbine (40);
wobei die Turbine (40) einen Radraum (60) benachbart zu einer Vielzahl von Rotorrädern (55) umfasst, und
ein Radraum-Wasserkühlungssystem (110) in Kommunikation mit dem Radraum (60), um einen Wasserstrom (120) dorthin bereitzustellen, wobei das Radraum-Wasserkühlungssystem (110) eine Wasserleitung (140) umfasst, die sich durch eines des einen oder der mehreren Bohrlöcher (70) ganz oder zum Teil erstreckt;
wobei das Radraum-Wasserkühlungssystem (100) oberhalb einer vorbestimmten Umgebungstemperatur aktiviert wird, **dadurch gekennzeichnet, dass** das Verdichter-Auslassgehäuse (50) in einem abgedichteten Zustand gehalten wird, um so zu verhindern, dass ein Verdichterluftstrom (20) den Radraum (60) durch das Verdichter-Auslassgehäuse (50) erreicht.

2. Gasturbinentriebwerk (100) nach Anspruch 1, wobei die Wasserleitung (140) eine konzentrische Leitung (170) umfasst.

3. Gasturbinentriebwerk (100) nach einem der Ansprüche 1 bis 2, wobei das eine oder die mehreren Bohrlöcher (70) in dem Verdichter-Auslassgehäuse (50) verschlossen sind, um einen Luftstrom (20) zu dem Radraum (60) zu verhindern.

4. Gasturbinentriebwerk (100) nach einem der vorstehenden Ansprüche, wobei das Radraum-Wasserkühlungssystem (110) eine Wasserquelle (130) umfasst.

5. Gasturbinentriebwerk (100) nach einem der vorstehenden Ansprüche, wobei das Radraum-Wasserkühlungssystem (110) eine Pumpe (150) umfasst.

6. Gasturbinentriebwerk (100) nach einem der vorstehenden Ansprüche, wobei das Radraum-Kühlungssystem (110) eine Austrittsdüse (160) umfasst.

7. Gasturbinentriebwerk (100) nach Anspruch 6, wobei die Austrittsdüse (160) eine Gegenstromstellung, eine Querstromstellung oder eine abgewinkelte Stellung umfasst.

8. Gasturbinentriebwerk (100) nach Anspruch 6 oder Anspruch 7, wobei die Austrittsdüse (160) eine Wärmedämmschicht umfasst.

9. Gasturbinentriebwerk (100) nach einem der vorstehenden Ansprüche, wobei der Wasserstrom (120) einen Wasserstrom in einem flüssigen Zustand und/oder einen Wasserstrom in einem gasförmigen Zustand umfasst, wobei gegebenenfalls der Wasserstrom (120) den gasförmigen Zustand während des stationären Betriebs der Turbine umfasst.

10. Gasturbinentriebwerk (100) nach einem der vorstehenden Ansprüche, wobei die Turbine (40) eine Vielzahl von Statorkomponenten (65) umfasst, die um den Radraum (60) positioniert sind.

11. Verfahren zum Kühlen eines Turbinenradraums (60) nach Bedarf mit erhöhter Effizienz, umfassend:
Bereitstellen einer Wasseraustrittsdüse (160) um den Turbinenradraum (60);
Überwachen einer Umgebungstemperatur;
Aktivieren der Wasseraustrittsdüse (160), wenn die Umgebungstemperatur eine vorbestimmte Temperatur überschreitet, um einen Wasserstrom zu dem Turbinenradraum (60) bereitzustellen; **dadurch gekennzeichnet, dass**
ein Verdichter-Auslassgehäuse (50) in einem abgedichteten Zustand gehalten wird, um so zu verhindern, dass ein Verdichterluftstrom (20) durch das Verdichter-Auslassgehäuse (50) in den Radraum (60) gelangt.

## Revendications

1. Moteur de turbine à gaz (100) destiné à être utilisé en partie dans des conditions de température ambiante élevée, comprenant :
un compresseur (15) dans lequel le compresseur (15) comprend un carter de refoulement de compresseur (50) traversé par un ou plusieurs trous d'alésage (70) ;
une turbine (40) ;
la turbine (40) comprenant un espace de roue (60) adjacent à une pluralité de roues de rotor (55) ; et
un système de refroidissement par eau d'espace de roue (110) en communication avec l'espace de roue (60) pour fournir un écoulement d'eau (120) à celui-ci, dans lequel le système de refroidissement par eau d'espace de roue (110) comprend une conduite d'eau (140) s'étendant à travers le ou les trous d'alésage (70) en totalité ou en partie ;
dans lequel le système de refroidissement par eau d'espace de roue (100) est activé au-dessus d'une température ambiante prédéterminée, **caractérisé en ce que**
le carter de refoulement de compresseur (50) est maintenu dans un état scellé de manière à empêcher un écoulement d'air de compresseur (20) d'atteindre l'espace de roue (60) à travers le carter de refoulement de compresseur (50).

2. Moteur de turbine à gaz (100) selon la revendication 1, dans lequel la conduite d'eau (140) comprend une ligne concentrique (170).

3. Moteur de turbine à gaz (100) selon l'une quelconque des revendications 1 à 2, dans lequel le ou les plusieurs trous d'alésage (70) dans le carter de refoulement de compresseur (50) sont obturés pour empêcher un écoulement d'air (20) vers l'espace de roue (60).

4. Moteur de turbine à gaz (100) selon une quelconque revendication précédente, dans lequel le système de refroidissement par eau d'espace de roue (110) comprend une source d'eau (130).

5. Moteur de turbine à gaz (100) selon une quelconque revendication précédente, dans lequel le système de refroidissement par eau d'espace de roue (110) comprend une pompe (150).

6. Moteur de turbine à gaz (100) selon une quelconque revendication précédente, dans lequel le système de refroidissement d'espace de roue (110) comprend une buse de refoulement (160).

7. Moteur de turbine à gaz (100) selon la revendication 6, dans lequel la buse de refoulement (160) comprend une position à contre courant, une position à courant transversal ou une position inclinée.

8. Moteur de turbine à gaz (100) selon la revendication 6 ou la revendication 7, dans lequel la buse de refoulement (160) comprend un revêtement de barrière thermique.

9. Moteur de turbine à gaz (100) selon une quelconque revendication précédente, dans lequel l'écoulement d'eau (120) comprend un écoulement d'eau à l'état liquide et/ou un écoulement d'eau à l'état gazeux, dans lequel éventuellement l'écoulement d'eau (120) comprend l'état gazeux pendant le fonctionnement stable de la turbine.

10. Moteur de turbine à gaz (100) selon une quelconque revendication précédente, dans lequel la turbine (40) comprend une pluralité de composants de stator (65) positionnés autour de l'espace de roue (60).

11. Procédé de refroidissement d'un espace de roue de turbine (60) à la demande à rendement accru, comprenant :
la fourniture d'une buse de refoulement d'eau (160) autour de l'espace de roue de turbine (60) ;
la surveillance d'une température ambiante ;
l'activation de la buse de refoulement d'eau (160) lorsque la température ambiante dépasse une température prédéterminée pour fournir un écoulement d'eau à l'espace de roue de turbine (60) ; **caractérisé en ce qu'il**
maintient un carter de refoulement de compresseur (50) dans un état scellé de manière à empêcher un écoulement d'air de compresseur (20) d'atteindre l'espace de roue (60) à travers le carter de refoulement de compresseur (50).
